# EUROPÄISCHE PATENTANMELDUNG

(11) **EP 0 597 229 A1**
(43) Veröffentlichungstag der Anmeldung: **18.05.1994**
(21) Anmeldenummer: 93115658.2
(22) Anmeldetag: 29.09.1993
(51) Int. Cl.: G01M 3/20, G01M 3/22

(54) **Verfahren zur Ermittlung von Undichtigkeiten in Wannen und Vorrichtung zur Durchführung des Verfahrens**

(30) Priorität: 30.09.1992 DE 4232803
(71) Anmelder: R+T UMWELT GmbH, D-04299 Leipzig (DE)
(72) Erfinder: Ruge, Klaus, D-14727 Döberitz (DE); Wünsch, Edgar, D-14712 Rathenow (DE)

(57) **Zusammenfassung**

Die vorliegende Erfindung betrifft ein Verfahren zur Ermittlung von Undichtigkeiten in Wannen durch das Erfassen von durch die Undichtigkeiten hindurchtretendem Edelgas mit einem Lecksuchgerät und einer Vorrichtung zur Durchführung des Verfahrens.

## Beschreibung

Die vorliegende Erfindung betrifft ein Verfahren zur Ermittlung von Undichtigkeiten in Wannen durch das Erfassen von durch die Undichtigkeiten hindurchtretendem Edelgas mit einem Lecksuchgerät und eine Vorrichtung zur Durchführung des Verfahrens.

Wannen werden in Gewerbe und Industrie in zahlreichen Fällen verwendet, um den darunterliegenden Bereich vor austretenden Stoffen, insbesondere Wasser gefährdenden und sonstigen Schadstoffen zu schützen.

So werden beispielsweise Lagerräume, in denen sich Chemikalien, brennbare Flüssigkeiten, giftige Stoffe, ätzende Stoffe oder wasser- und bodengefährdende Stoffe befinden, mit einer Wanne versehen, d. h. mit einer Platte beispielsweise aus Stahl, die seitlich aufgekantet ist und auf der Bodenplatte des Raumes aufliegt.

Die genannten Stoffe befinden sich üblicherweise in Gebinden. Es besteht jedoch die Gefahr, daß an den Gebinden Undichtigkeiten entstehen, daß die Verschlüsse geöffnet sind und die Gebinde umkippen oder umgeworfen werden und als Folge die Stoffe in die Wanne gelangen. Bei Undichtigkeiten in der Wanne können diese Stoffe, insbesondere Flüssigkeiten in den Bereich unter der Wanne gelangen, beispielsweise auf eine Betonplatte und durch Undichtigkeiten in derselben ins Erdreich gelangen oder auch bei Fehlen einer Bodenplatte direkt ins Erdreich gelangen.

Auf diese Weise können unbemerkt Verschmutzungen des genannten Bereiches auftreten. Da zunehmend durch gesetzliche Auflagen solche Störfälle für den Betreiber schwerwiegende wirtschaftliche Folgen haben können, müssen verläßliche Maßnahmen ergriffen werden, um die geschilderten Folgen der Störfälle zu vermeiden.

Gleiches gilt für zahlreiche Industrie- und gewerbliche Betriebe, in denen die Gefahr besteht, daß die genannten Stoffe aus Undichtigkeiten an Pumpen, Flanschen, Dichtungen usw. austreten. Auch hier ist eine Bodenwanne erforderlich, welche die Stoffe auffängt, wobei, wie oben bereits beschrieben, auch hier die Gefahr besteht, daß die Stoffe in den Bereich unterhalb der Wanne gelangen.

Nach dem Stand der Technik werden verschiedene aufwendige Maßnahmen ergriffen, um die genannten Verschmutzungen zu vermeiden. So werden Lagerhallen oder Betriebsgelände bzw. -gebäude unterkellert oder es wird ein zweiter Betonboden eingezogen, der sich zum oberen Boden in einem solchen Abstand befindet, daß der dazwischenliegende Spalt abgepumpt werden kann.

Eine weitere Maßnahme ist das Anbringen von Bohrlöchern, so daß der erbohrte Boden geprüft bzw. analysiert werden kann.

Der Anmelderin ist es nunmehr gelungen, auf sehr einfache, wirtschaftliche Weise eine ständige Überwachung von Wannen zu ermöglichen, durch eine Prüfmethode zur Ermittlung von Undichtigkeiten in Wannen, dadurch gekennzeichnet, daß zwischen Wanne und darunter vorhandener Fläche ein Edelgas eingebracht wird, das im Zwischenraum zwischen Aufkantung der Bodenwanne und seitlich angrenzenden Flächen eine Dichtung angebracht wird und daß auf der Wanne Messungen zur Erfassung von Edelgas(en) mittels eines Lecksuchgerätes durchgeführt werden.

Die Erfindung betrifft ferner eine Vorrichtung zur Überwachung von Undichtigkeiten in Wannen, dadurch gekennzeichnet, daß die Wanne seitlich aufgekantet ist und sich zwischen Aufkantung und seitlich angrenzenden Flächen eine Dichtung befindet und daß sich zwischen Wanne und Bodenplatte ein Edelgas unter leichtem Überdruck befindet sowie die Verwendung der beschriebenen Vorrichtung und die Verwendung von Edelgasen zur Ermittlung von Undichtigkeiten von Wannen.

Figur 1 stellt eine erfindungsgemäße Vorrichtung dar.

In Figur 2 ist zusätzlich ein Überlauf dargestellt.

Es ist zwar bekannt, Edelgase zur Bestimmung von Undichtigkeiten in den Wandungen evakuierter Räume zu verwenden, in dem man solche Räume mit einem Doppelmantel versieht und sich das Edelgas zwischen evakuiertem Raum und Doppelmantel befindet. In dem evakuierten Raum kann eindringendes Edelgas mittels eines Detektors gemessen werden.

Trotz der geschilderten aufwendigen Maßnahmen des Standes der Technik sind jedoch Edelgase bisher nicht zur Ermittlung von Undichtigkeiten in Wannen verwendet worden.

Obgleich alle Edelgase im erfindungsgemäßen Verfahren eingesetzt werden können, ist der Einsatz von Helium und ggf. Argon bevorzugt. Auch Edelgasgemische können erfindungsgemäß eingesetzt werden. Das Edelgas kann auf einfache Weise aus einem Druckbehälter in den abgedichteten Zwischenraum zwischen Wanne und angrenzenden Flächen eingeführt werden, wobei beispielsweise der Druckbehälter eine transportable Druckgasflasche sein kann. Über Ventile bzw. Reduzierventile kann der gewünschte Druck eingestellt werden. Eine übliche erfindungsgemäße Anordnung besteht aus dem Boden der Lagerhalle oder einer Fabrikanlage bzw. eines Fabrikgebäudes oder dem Fundament, auf dem sich technische Anlagen befinden, wobei ein solcher Boden üblicherweise ein Beton- bzw. Stahlbetonboden ist und der auf dem Boden angeordneten seitlich abgedichteten Wanne.

Hierbei ist es erfindungsgemäß von Vorteil, wenn zwischen Wanne und Boden ein Zwischenraum geschaffen wird, die Wanne also nicht direkt auf dem Boden bzw. der Bodenplatte aufliegt, sondern z. B. durch Erhebungen oder Stützen unterschiedlicher Art gegenüber dem Boden erhöht ist. Der Boden bzw. Betonboden kann vorteilhafterweise selbst als Wanne ausgebildet sein.

Die gesamte Bodenkonstruktion ist vorteilhafterweise als selbständig tragende Konstruktion ohne Verbund mit den Fundamenten des Hallengebäudes ausgeführt, da Lasten, Kräfte oder Verformungen aus der Konstruktion des Gebäudes sich auf die Fußbodenkonstruktion übertragen können.

Undichtigkeiten zwischen den Fundamenten und der Bodenkonstruktion sind erfindungsgemäß ebenfalls abzudichten.

Der Inhalt der Wanne ist so auszulegen, daß sie mindestens 10 % des maximalen Lagervolumens aufnehmen kann.

Die auf den Boden aufgebrachte Wanne besteht üblicherweise aus Stahl, wobei die Stahlplatten durchgehend verschweißt sind. Um die Resistenz gegen chemische Angriffe zu erhöhen, kann der Stahl gestrahlt und mit einem chemikalienfesten Anstrich versehen werden. Die Wanne kann mit der Betonplatte fest verdübelt werden. Eine solche Konstruktion soll im allgemeinen nicht dauernd Schadstoffen ausgesetzt sein, sondern als Sicherung für Störfälle dienen.

Die Wanne ist seitlich etwas aufgekantet, im allgemeinen nicht höher als 15 cm. Bei einer gewählten Höhe von 15 cm besitzt sie einen Überlauf von etwa 10 cm Höhe. Da die Wanne insgesamt vorzugsweise mit einem Gefälle von z. B. 0,5 % verlegt ist, an dessen tiefstem Punkt im allgemeinen ein Schacht angebracht ist, kann ausgetretene Flüssigkeit in diesen Schacht abfließen.

Der Schacht ist zusätzlich über ein Überlaufsystem mit einem 10 cm hohen Wehr mit einem Löschwasserrückhaltebecken verbunden, so daß im Brandfall Löschwasser zu diesem Becken abfließen kann.

Die Wanne ist so dimensioniert, daß die Aufkantung seitlich an den seitlichen Wänden anliegt oder nahezu anliegt. Die seitlichen Wände können z. B. die Aufkantungen des Betonbodens sein, aber auch die Seitenwände des Gebäudes, auf dessen Bodenplatte sich die Wanne befindet. Erfindungsgemäß wird der Zwischenraum zwischen Wannenaufkantung und an die Aufkantung angrenzenden Wänden mit einer Dichtung versehen.

Diese Dichtung kann grundsätzlich aus beliebigen Dichtungsmaterialien bestehen. Bevorzugt sind dauerelastische Materialien, die in den Zwischenraum eingepreßt werden können. Beispiele für solche Materialien sind Polyurethan, Silikonmaterialien, Acrylate und andere. Es ist von Vorteil, wenn die Materialien verschäumbar sind.

In den Zwischenraum zwischen Dichtung, Wanne und Boden läßt man nunmehr das Edelgas einströmen. Im allgemeinen erfolgt dies durch zwischen Betonplatte und Wanne angeordneten perforierten Rohren, die beispielsweise diagonal verlegt sein können. Über ein Druckeinstellventil stellt man einen Druck ein von 1 mbar bis grundsätzlich dem Druck, mit dem die Dichtung belastbar ist. Im allgemeinen liegt der Druck bei 5 mbar bis 250 mbar Überdruck, bevorzugt bei 10 bis 100 mbar Überdruck. Mit dem an der Edelgasdruckflasche angebrachten Druckhalteventil wird der Druck zwischen Bodenplatte und Wanne aufrecht erhalten, wobei aus dem Zwischenraum herausdiffundierendes Gas laufend ersetzt wird. Obgleich alle Edelgase erfindungsgemäß einsetzbar sind, sind Argon und insbesondere Helium bevorzugt. Die Edelgase haben den Vorteil, daß sie inert und aufgrund ihres Diffusionsverhaltens besonders leicht durch Undichtigkeiten hinduchtreten und letztere hierdurch besonders zuverlässig ermittelt werden können.

Zur Lokalisierung der Leckstelle wird Raumluft in Bodennähe auf der Wanne angesaugt, zum Prüfgerät geleitet und eventuell vorhandene Heliumspuren nachgewiesen. Als Lecksuchgerät dient vorzugsweise ein Massenspektrometer, das beispielsweise tragbar oder fahrbar sein kann. Grundsätzlich können auch andere physikalische Meßgeräte zum Ermitteln von ausgetretenem Edelgas verwendet werden.

Nach Ermittlung der Undichtigkeit kann diese durch Nachschweißen oder Austausch von Bodensegmenten beseitigt werden. Die erfindungsgemäße Prüfmethode kann nach jedem Störfall und bei Wiederholungsprüfungen angewandt werden und garantiert eine kontrollierte Bodenabdichtung. Die erfindungsgemäße Anordnung von Bodenplatte und abgedichteter Wanne mit einem dazwischen befindlichen Edelgas kann auch auf mehreren Ebenen bzw. Etagen von Gebäuden vorliegen.

Die erfindungsgemäße Verwendung eines Edelgases, das sich als unter leichtem Überdruck stehende Gasschicht zwischen einer Bodenplatte und einer auf dieser befindlichen, seitlich abgedichteten Wanne befindet, in Verbindung mit der Verwendung eines Lecksuchgerätes zum Aufspüren aus Undichtigkeiten in der Wanne austretendem Edelgas, stellt einen großen Vorteil gegenüber den Methoden des Standes der Technik dar.

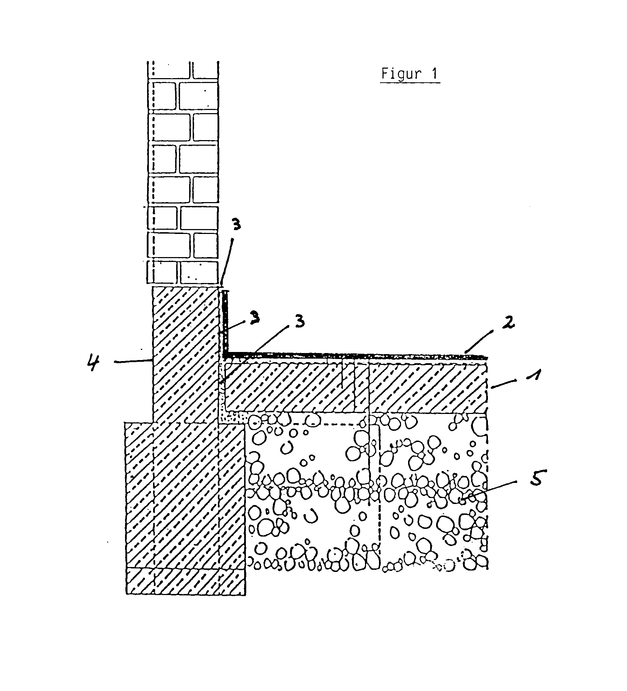

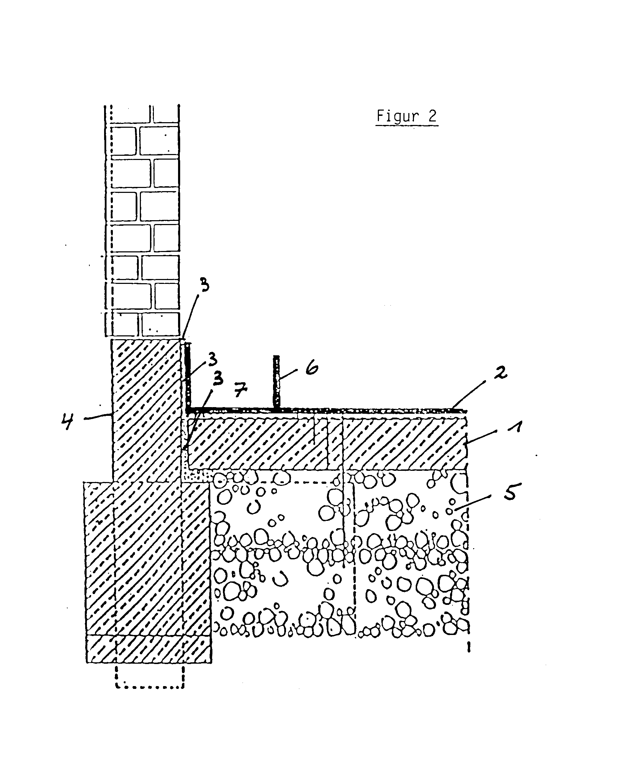

Mit Hilfe der Figuren 1 und 2 wird die Erfindung näher erläutert.

In Figur 1 stellt 1 die Betonbodenplatte dar. 2 stellt die seitlich aufgekantete Wanne dar. Zwischen 2 und dem Teil 4 des Fundaments und ggf. zwischen 1 und 4 befindet sich die Dichtungsschicht. 5 ist der Boden unter der Betonbodenplatte.

In Figur 2 ist zusätzlich ein Überlauf 6 dargestellt. Flüssige Schadstoffe können über 6 in Rinne 7 überlaufen und durch diese abfließen.

## Patentansprüche

1. Prüfmethode zur Ermittlung von Undichtigkeiten in Wannen, dadurch gekennzeichnet, daß zwischen Wanne und darunter vorhandener Fläche ein Edelgas eingebracht wird, daß im Zwischenraum zwischen Aufkantung der Wanne und seitlich angrenzenden Flächen eine Dichtung angebracht wird und daß auf der Wanne Messungen zur Erfassung von Edelgas(en) durchgeführt werden.

2. Prüfverfahren nach Anspruch 1, dadurch gekennzeichnet, daß als Edelgas Helium eingesetzt wird.

3. Prüfverfahren nach den Ansprüchen 1 und 2, dadurch gekennzeichnet, daß ein Edelgasüberdruck von 1 mbar bis zur maximalen Druckbelastung der Dichtung eingestellt wird.

4. Prüfverfahren nach den Ansprüchen 1 und 3, dadurch gekennzeichnet, daß ein Edelgasüberdruck von 5 mbar bis 250 mbar, bevorzugt von 10 bis 100 mbar eingestellt wird.

5. Prüfverfahren nach den Ansprüchen 1 bis 4, dadurch gekennzeichnet, daß dauerelastische Dichtungsmaterialien eingesetzt werden.

6. Prüfverfahren nach den Ansprüchen 1 bis 5, dadurch gekennzeichnet, daß zur Erfassung von aus Undichtigkeiten austretendem Edelgas ein Massenspektrometer eingesetzt wird.

7. Vorrichtung zur Ermittlung von Undichtigkeiten in Wannen nach den Ansprüchen 1 bis 6, dadurch gekennzeichnet, daß zwischen Bodenplatte und sich auf dieser befindender seitlich aufgekanteter Wanne eine Dichtung angebracht ist und sich zwischen Bodenplatte und Wanne ein Edelgas unter leichtem Überdruck befindet.

8. Verwendung von Edelgasen zur Ermittlung von Undichtigkeiten in Wannen nach der Prüfmethode gemäß den Ansprüchen 1 bis 6.

9. Verwendung einer Vorrichtung nach Anspruch 7 zur Ermittlung von Undichtigkeiten in Wannen.
